# EUROPEAN PATENT SPECIFICATION

(11) **EP 4 148 198 B1**
(45) Date of publication and mention of the grant of the patent: **08.05.2024**
(21) Application number: 22194835.9
(22) Date of filing: 09.09.2022
(51) Int. Cl.: E04B 1/41, F16B 7/04, F16B 2/12, E04B 1/58, E04B 1/38, E04B 2/76, F16B 7/22

(54) **CONNECTOR FOR CONSTRUCTION PROFILES**
VERBINDER FÜR BAUPROFIELEN
CONNECTEUR POUR PROFILÉS DE CONSTRUCTION

(30) Priority: 14.09.2021 CZ 20210425
(43) Date of publication of application: 15.03.2023
(73) Proprietor: Alcadrain s.r.o., 170 00 Praha 7, Holesovice (CZ)
(72) Inventor: Fabicovic, Frantisek, 691 42 Valtice (CZ)
(74) Representative: Musil, Dobroslav

(56) References cited:
- EP-A1- 1 213 490
- EP-A2- 1 441 081
- DE-A1-102004 040 589

## Description

### Technical field

The invention relates to a connector for construction profiles, in particular for dry construction of buildings and sanitary appliances, which comprises a pair of face plates arranged in parallel, each of which is provided with at least two curved edges for attachment to construction profiles, wherein the connector further comprises a clamping element which transversely connects the face plates and at least one suspension member is arranged between the face plates.

### Background art

Supporting frames of building systems for dry construction of building walls with prefabricated installation devices, e.g., flushing modules, basin modules, etc., usually consist of longitudinal construction profiles, e.g., pipes, rails, U-profiles, C-profiles, etc., as well as various types of connectors for connecting these longitudinal construction elements and for connecting the installation devices to the supporting frame.

German utility model DE 202004017856 discloses a sheet metal connector with two parallel face plates on the edges firmly transversely connected by a sheet metal base, which allows flexible movement of the face plates. The most commonly used sheet metal connector for rectangular joining of construction elements according to DE 202004017856 comprises a pair of parallel flat face plates in the shape of right-angled isosceles triangles, which are provided with retaining tongues/grips on the edges, on the legs of the triangle, for fixing in the grooves of the longitudinal construction elements to be joined. The connector is further provided with a tightening screw threaded through a hole in a first face plate and screwed into a thread in a hole in a second face plate of the connector for tightening the faces of the connector and thus for fixing the retaining tongues in the grooves of the construction elements to be joined.

Furthermore, a connector is known from practice, the face plates of which, instead of being firmly connected by a transverse sheet metal base, as in DE 202004017856, are connected at the edges by interlocking hinges, which are formed on two opposite metal face plate edges curved to each other. Such a connection of the face plates enables their mutual swinging movement in a circle, wherein the connector is provided with a compression metal coil spring which is put on a clamping screw and cushions the swingingly connected face plates.

Document DE102004040589A1 discloses a profiled rail system, which has an angle connecting unit with two plates inserted at a contact side of profiled rails and/or arranged at a longitudinal side of the rails. The plates are connected to the rails and/or to an adapter component by expanding the plates and guiding devices against the contact side by a spreading component. The rails are in resting positions to each other by an outer contour of the unit and/or the guiding devices.

Document EP 1213490A1 discloses a connection means for profile rods, the means is provided with at least one screw and with two plates which can be detachably fastened to at least one profile rod, each plate has inclined clamping surfaces for clamping into grooves of one or more profile rods. The two plates are held at a determined distance from one another by a spring, so that the plates can be elastically snapped into the grooves of the profile bars.

The disadvantage of known connectors with face plates which are on the edges flexibly and/or swingingly connected by a base and/or hinges is that when the connector is tightened, the face plates with grips move in a circle, but are tightened to straight longitudinal grooves or to straight longitudinal edges of the construction profiles. This results in permanent deformation of the connector and/or the profile when tightened firmly, so that tightening requires a significant tightening force on the tightening element and at the same time does not allow the face plates of the connector to be made of solid, strong, inflexible sheet steel. In addition, when the connector and/or construction profile is deformed when strongly tightened, the parts to be connected may shift due to the deformation. Such a once firmly tightened and deformed connector and/or construction profile usually cannot be reused in the event of the need to rebuild the structure.

Another disadvantage of such known connectors is that in a compact embodiment of a connector with face plates in a base of a triangular shape, the connector can only be used for the connection of two construction profiles at one defined angle, usually at a right angle, but it cannot also be used for another angle of the connection of the profiles and/or for the connection of three construction profiles. Although DE 202004017856 also describes other shape variants of the connector, which enable two construction profiles to be connected not only at right angles, but also at one more angle, or to connect three construction profiles, however, the faces of such connectors have the shape of a quadrilateral or hexagon, which, while maintaining the required strength of the connection, compared to a triangular connection, necessarily increases the size of the connection.

The object of the invention of a connector for construction profiles is to eliminate or at least minimize the above-mentioned disadvantages of the background art.

### Summary of invention

The object of the invention is achieved by a connector for construction profiles, in particular for dry construction of building walls and sanitary appliances which, similar to known connectors, comprises a pair of face plates arranged in parallel, each of which is provided with at least two curved edges for attachment to construction profiles. The connector further comprises a clamping element that transversally connects the face plates. A suspension member is arranged between the face plates, wherein the suspension member comprises a pair of bases for connection with the face plates, each of which is arranged on at least part of the inner surface of the respective face plate and which are interconnected by at least one cushioning elastic element formed by a longitudinal elastic arm which is bent when assembled, thus facilitating the handling of the connector during assembly of the construction profiles. The longitudinal elastic arm movably elastically connects the opposing bases of the suspension member so that it bends as they approach each other and straightens when they move away from each other. Another advantage of this connector is that it does not have to be provided with a connecting base on its edge, so this free edge can be used to form a grip and the connector can be used to connect more profiles at more different angles of connection than other similarly shaped connectors known from the background art allow.

In a preferred embodiment of the connection described above, the suspension member includes at least one spacer element, arranged ideally between the bases, to define the distance between the bases and to prevent deformation of the suspension elastic member mounted between them during the handling of the connection.

In a preferred embodiment of the connection described above, the pair of bases of the suspension member is formed by a pair of substantially parallel flat plates adapted in shape and dimensions for mounting on the inner surfaces of the face plates, which facilitates the production of the above-described connection.

In a preferred embodiment of connection with a suspension member with a pair of bases formed by a pair of substantially parallel flat plates, each base comprises a hole for the passage of a transverse clamping element, arranged ideally in the centre or substantially in the centre of the base, the two bases being connected together by a pair of suspension elastic elements arranged at the sides of the holes for the clamping element, thereby achieving laterally balanced cushioning of the connector faces.

In addition, it is advantageous if a main spacer element is arranged between the suspension elastic elements, ideally next to the hole for the clamping element which prevents the face plates from getting too close when the connector is tightened, which might squeeze and damage the suspension elastic elements.

Furthermore, it is advantageous if at least one of the bases is provided on its circumference with regularly arranged auxiliary spacer elements. The auxiliary spacer elements serve to limit the distance of the opposite edges of the bases of the suspension member and thus also to limit the distance of the opposite curved edges of the face plates, thus increasing the comfort of using the connector when connecting construction profiles. The auxiliary spacer elements arranged on one base are ideally designed to be 5 % to 50 % lower than the main spacer element arranged on the same base, thereby allowing the bases, and thus the edges of the face plates, to swing around the main spacer element.

At least one face plate of the connector in any of the above described embodiments of a connector with a suspension member with a pair of bases interconnected by a longitudinal suspension elastic element is preferably provided with means for fitting and/or fixing the base of the suspension member on the inside of the face plate, e.g., holes for inserting the protrusions of the base of the suspension member, protrusions for insertion into the holes in the suspension member, grips for attaching the edge of the base of the suspension member, etc.

In any of the above-described embodiments, each of the face plates of the connector is preferably formed from one piece of metal sheet, e.g., by cutting pressing, bending etc., whereby the suspension member is formed from a single piece of plastic by the method of injection moulding. Sheet metal face plates provide sufficient connector strength and are economically manufacturable by sheet metal cutting and/or stamping. The plastic suspension member can be produced economically by injecting the plastic into a mould as a single piece resistant to corrosion, which, if another material were used, could reduce in particular the functionality of the suspension elastic member. When assembling such a connector, the sheet metal face plates are joined together simply by sliding and/or snapping onto the bases of the plastic suspension member and there is no need to connect them at the edges with a metal base.

In a preferred embodiment, the face plates have a triangular shape at the base, whereby each of the face plates is provided with three curved edges for attachment to construction profiles, thereby increasing the variability of the widely used basic triangular-shaped connector, which, unlike known triangular connectors, can thus be used for connecting three construction profiles by one triangular connector.

### Brief description of drawings

The invention is schematically represented in the drawings, wherein Fig. 1 shows a perspective view of a first embodiment of a connector for construction profiles according to the present invention, Fig. 2 shows perspective view of an disassembled connector in a second embodiment, Fig. 3 is a perspective view of a suspension member of the connector in the second embodiment, Fig. 4 shows three construction profiles connected by the connector.

### Description of embodiments

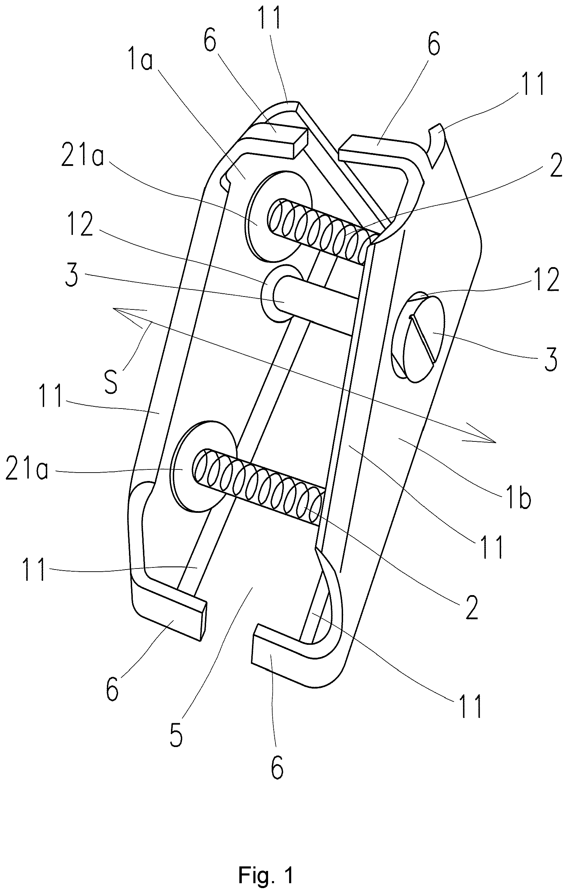

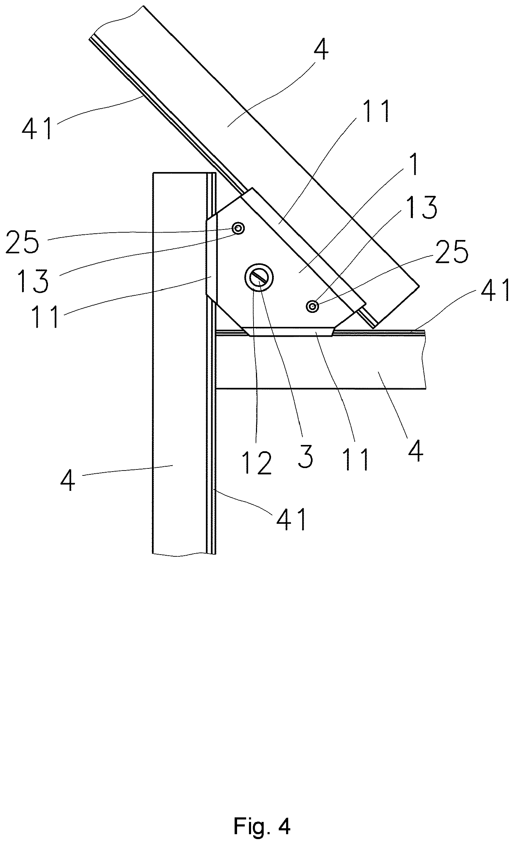

The connector of construction profiles 4, e.g., profiled pipes, rails, U profiles, C profiles, etc., according to the present invention, comprises a pair of parallel arranged face plates 1a, 1b, each of which is provided with at least two curved edges 11 to form a grip for attaching the connector to construction profiles 4, to their longitudinal fastening elements 41 (Fig. 4), wherein the face plates 1a, 1b of the connector in the assembled state (Fig. 1) define the internal space 5 of the connector. The connector is further provided with a transversely arranged clamping element 3, a screw, clamping eccentric, etc. for the transverse interconnection of the face plates 1a, 1b and for firmly clamping the connector to the longitudinal construction profiles 4 to be connected. In the internal space 5 of the connector, at least one suspension member 2 is arranged between the face plates 1a, 1b for swinging cushioning and rectilinear sliding connection of the face plates 1a, 1b. The suspension member 2 comprises a pair of bases 21a, 21b which abut on at least part of the inner surface of the face plates 1a, 1b and are interconnected by at least one suspension elastic element 24, whereby, in contrast to connectors known from the background art, the connector is adapted for easy assembly during which the face plates 1a, 1b connected by the suspension member 2 can be flexibly rotated relative to each other on all their edges 11 and at the same time can be flexibly moved closer/further rectilinearly in the S direction by clamping/loosening the connector by the clamping element 3.

In the first embodiment, schematically represented in Fig. 1, the connector is provided with two suspension members 2 arranged in the internal space 5 of the connector around the clamping element 3. Each suspension member 2 comprises two bases 21a, 21b, whereby each of the bases abuts part of the inner surface of one of the face plates 1a, 1b. Two opposite bases 21a, 21b of one suspension member 2 are always connected by one suspension elastic element 24.

In the first embodiment of the connector, the face plates 1a, 1b are provided with spacer elements 60 (Fig. 1) to limit the shortest distance of the face plates 1a, 1b of the assembled connector and to prevent damage to the suspension member 2 by the face plates 1a, 1b which are brought closer to each other by tightening the clamping element 3.

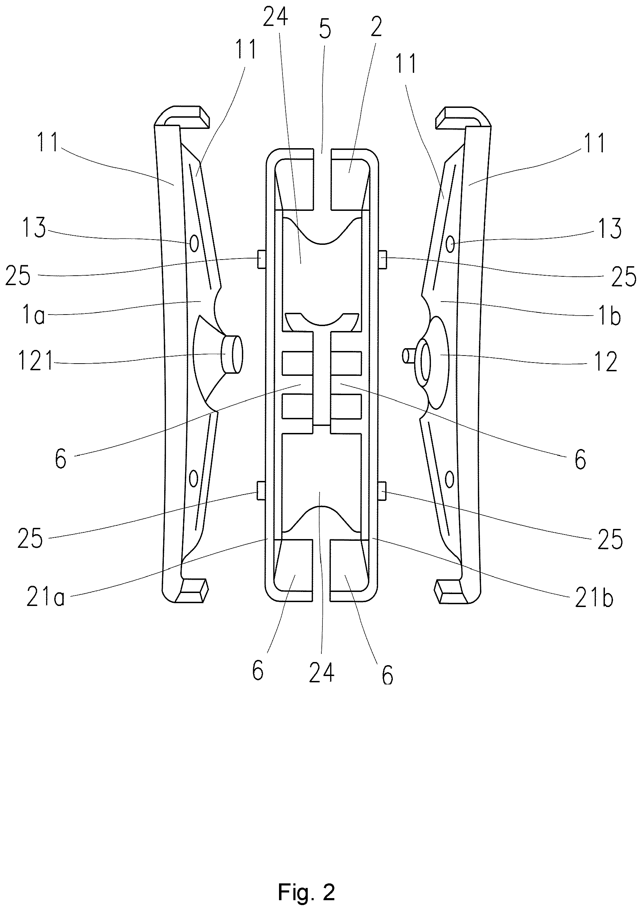

In the second embodiment, schematically represented in Fig. 2, the connector is provided only with one suspension member 2, which comprises two bases 21a, 21b resting substantially on the entire surface of the face plates 1a, 1b and connected by two suspension elastic elements 24 formed as longitudinal arms.

In yet another unillustrated embodiment, the connector is provided with two, four or another suitable number of suspension members 2, according to the size and shape of the connector, which are arranged in the internal space 5 of the connector, ideally symmetrically around the clamping element 3.

Furthermore, the connector in the second embodiment (Fig. 2) is provided with at least one spacer element 6 to limit the shortest distance of the face plate 1a, 1b of the assembled connector and to prevent the suspension member 2 to be damaged by the face plates 1a, 1b which are brought closer to each other by the tightening of the clamping element 3.

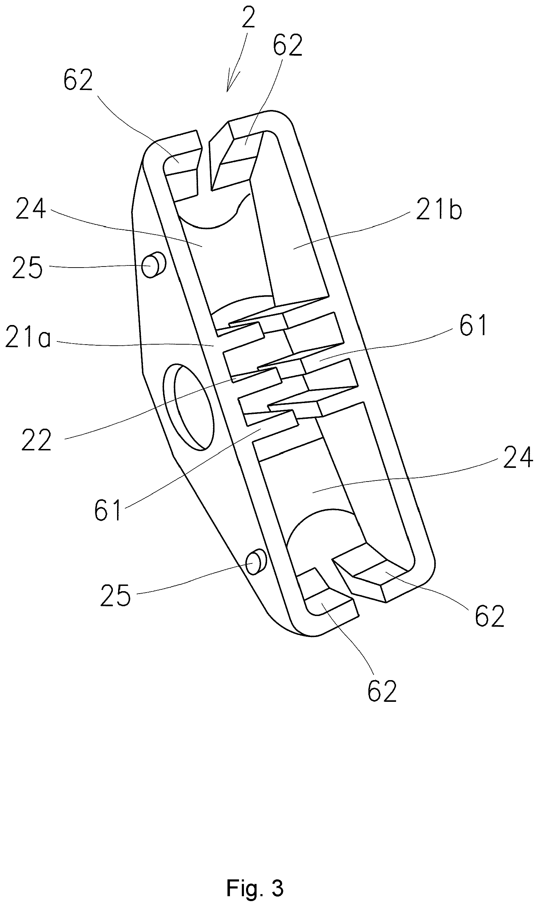

The pair of bases 21a, 21b of the suspension member 2 in the second embodiment (Figs. 2, 3) is a pair of parallel or substantially parallel flat plates which are adapted in shape and size to the internal space 5 of the connector, wherein the first base 21a is adapted in its shape and size to fit in the first plate 1a and the second base 21b je is adapted in shape and size to fit in the second face plate 1b.

The base 21 of the suspension member (Figs. 2, 3) is provided with protrusions 25 for insertion into the holes 13 in the face plate 1a, 1b.

Furthermore, each base 21a, 21b comprises a hole 22 for the passage of the clamping element 3, which, in this second embodiment of the connector, is a screw. On the sides of the opposite holes 22 (Figs. 2, 3) is arranged, ideally symmetrically, a pair of suspension elastic elements 24, longitudinal arms, which transversely connect the bases 21a, 21b and which, in the assembled state of the connector, are bent towards the inside of the connector.

In the second exemplary embodiment of the connector, between the suspension elastic elements U (Fig. 3), on the inner side of the base 21 oriented towards the centre of the connector, a main spacer element 61 is arranged to limit the mutual distance of the face plates 1a, 1b. The main spacer element 61 is arranged next to the hole 22 for the clamping element 3, ideally abutting and/or surrounding it.

Optionally, the at least one base 21 of the suspension member 2 (Fig. 3) is provided on its edges with auxiliary spacer elements 62, which are ideally regularly arranged on the circumference of the base 21 of the suspension member 2, to limit the relative distance of the edges of the face plates 1a, 1b when they are tilted towards/apart from each other around the main spacer element 61 and when they are rotated relative to each other around the axis of the transverse clamping element 3 during the clamping of the connector to the construction profiles 4. The auxiliary spacer elements 62 are 5 % to 60 %, preferably 10 % to 30 % lower than the main spacer element 61 arranged on the same base 21.

The suspension member 2 is preferably made as a single plastic component by injection moulding of plastic into a mould, ideally from a single piece of polyamide Pa6 or, alternatively, from a single piece of polyoxymethylene (POM), polypropylene (PP), acrylonitrile butadiene styrene (ABS), etc.

In other embodiments, the suspension member 2 can be made of another flexible material and can be composed of more pieces, e.g., of two bases 21 and of separately produced suspension elastic elements 24 and spacer elements 61 and/or 62.

The face plate 1 (Figs. 1, 2) with curved edges 11 is preferably made by pressing from one piece of metal, e.g., steel, aluminium, duralumin etc., sheet, wherein, in the centre or substantially in the centre of the face plate 1, a hole 12 for the clamping element 3 is formed, which may be provided with an internal thread 121. Around the hole 12 for the clamping element, further holes 13 are preferably formed in the face plate 1 for mounting the base 21 of the suspension member 2.

In another unillustrated embodiment, the face plate 1 may comprise other suitable means for mounting and/or attaching the base 21 of the suspension member 2, such as one, three or substantially any number of holes, protrusions, depressions, grips, retaining tongues, etc.

In the two exemplary embodiments described above (Figs. 1, 2, 4), the connector has a triangular shape at the base, wherein each of the pair of parallel arranged face plates 1a, 1b has a triangular shape at the base and is provided with three curved edges 11 for forming a grip for attachment to the construction profiles 4. In the second preferred embodiment, the suspension member 2 of this connector has a triangular shape (Fig. 3), in the centre of which or substantially in the centre of which is arranged a hole 22 for the clamping element 3 and the main spacer element 61. A pair of suspension elastic elements 24 is arranged at the sides of the suspension member 2. Optionally, three auxiliary spacer elements 62 are arranged at the vertices of the triangular base 21 of the suspension member 2.

Each of the face plates 1a, 1b in the base of a triangular shape is provided with three curved edges 11 to form a grip, wherein the curved edges 11 of one face plate 1 form three sharp angles together in the surface of the face plate 1, if the connector has the shape of a right-angled triangle at the base, they form two acute angles and one right angle. The connector provided with such face plates can be used, in contrast to triangular connectors known from the background art, to join two construction profiles 1 at right and acute angles and/or to join three construction profiles 1 (Fig. 4).

In other unillustrated embodiments, the connector can have the shape of any polygon at the base and can be provided with face plates 1a, 1b in the shape of such a polygon at the base, in order to achieve the desired combinations of angles for connecting construction profiles 4.

When assembling the connector according to the present invention, the suspension member 2 is placed between the face plates 1a, 1b in the internal space 5 of the connector and is seated in the respective face plates 1a, 1b. Then, the clamping element 3 is inserted through the holes 12, 22 for the clamping means 3 and fixed in the connector, e.g., by screwing it into one of the face plates 1a, 1b of the connector, pushing it through the two face plates 1a, 1b of the connector and clamping it with a quick-release clamp (not shown), etc.

When connecting the construction profiles 4, the assembled connector is placed with curved edges 11 in the longitudinal fastening elements 41 and is loosely clamped to the profiles by the clamping element 3. Then the construction profiles 4 are set to the desired positions and the face plates 1a, 1b move rectilinearly and are firmly clamped by the clamping element 3 in the S direction of clamping/loosening the face plates 1a, 1b, whereby the connected construction profiles 4 are firmly attached to each other by the connector.

In the exemplary embodiments of the connector shown in Figs. 1, 2 and 4, the curved edges 11 of the connector in the assembled state are oriented towards the inside of the connector, so that the opposite edges 11 are inclined towards each other and the connector is configured in such a way that when the connector is clamped by the clamping element 3, the face plates 1a, 1b move towards each other rectilinearly in the S direction of the clamping of the connector. When connecting the construction profiles 4, such a connector is first placed on the construction profile 4 so that the longitudinal fastening elements 41 of the construction profile 4 are arranged between the opposite curved edges 11 of the face plates 1a, 1b of the connector (Fig. 4), then the connector is clamped by the clamping element 3 and the face plates 1a, 1b move towards each other rectilinearly and against the longitudinal fastening elements 41 on the construction profile 4.

In another unillustrated embodiment of the connector, the curved edges 11 of the connector in the assembled state oriented outward from the connector so that the opposite edges 11 are inclined away from each other and the connector is adapted in such a way that when the connector is being clamped by the clamping element 3, the face plate 1a, 1b move away from each other rectilinearly in the S direction of the clamping of the connector. When connecting the construction profiles 4, the connector is first placed in the construction profile 4 in such a way that the opposite curved edges 11 of the face plates 1a, 1b of the connector are arranged between the longitudinal fastening elements 41 of the construction profile 4, then the connector is clamped by the clamping element 3 and the face plates 1a, 1b move away from each other rectilinearly, against the longitudinal fastening elements 41 in the construction profile 4.

### List of references

- 1: face plate
- 1a: first face plate
- 1b: second face plate
- 11: edge
- 12: hole for the clamping element in the face plate
- 121: thread
- 13: hole for mounting the base of the suspension member
- 2: suspension member
- 21: base
- 21a: first base
- 21b: second base
- 22: hole for the clamping element in the suspension member
- 24: suspension elastic element
- 25: protrusion
- 3: clamping element
- 4: construction profile
- 41: longitudinal fastening element
- 5: internal space of the connector
- 6: spacer element
- 60: spacer element of the face plates
- 61: main spacer element
- 62: auxiliary spacer element
- S: clamping/loosening direction

## Claims

1. A connector of construction profiles (4), in particular for dry construction of walls of buildings and sanitary appliances, which comprises a pair of face plates (1a, 1b) arranged in parallel, each of which is provided with at least two curved edges (11) for attachment to construction profiles (4), wherein the connector further comprises a clamping element (3), which transversely connects the face plates (1a, 1b), and at least one suspension member (2) is arranged between the face plates (1a, 1b), **characterized in that** the suspension member (2) comprises a pair of bases (21a, 21b), each of which is arranged on at least part of the inner surface of the respective face plate (1a, 1b), wherein the bases (21a, 21b) are interconnected by at least one suspension elastic element (24)
, which is formed by a longitudinal arm which is bent in the assembled state of the connector.

2. The connector according to claim 1, **characterized in that** the suspension member (2) comprises at least one spacer element (61, 62).

3. The connector according to any of claims 1 or 2, **characterized in that** the pair of bases (21a, 21b) of the suspension member (2) is formed by a pair of substantially parallel face plates.

4. The connector according to claim 3, **characterized in that** each base (21a, 21b) comprises a hole (22) for the passage of the clamping element (3), wherein both bases (21a, 21b) are interconnected by a pair of suspension elastic elements (24) which are arranged on the sides of the holes (22) for the clamping element (3).

5. The connector according to claim 4, **characterized in that** a main spacer element (61) is arranged between the suspension elastic elements (24) next to the hole (22) for the clamping element (3).

6. The connector according to claim 5, **characterized in that** at least one of the bases (21a, 21b) is provided on its circumference with regularly arranged auxiliary spacer elements (62).

7. The connector according to any of claims 1 to 6, **characterized in that** at least one of the pair of face plates (1a, 1b) is provided with means for putting on and/or fixing the base (21) of the suspension member (2).

8. The connector according to any of claims 1 to 7, **characterized in that** each of the face plates (1a, 1b) is formed from a single piece of sheet metal and the suspension member (2) is formed from a single piece of plastic.

9. The connector according to any of claims 1 to 8, **characterized in that** the face plates (1a, 1b) have a triangular shape at the base, each of the face plates (1a, 1b) being provided with three curved edges (11) for attachment to the construction profiles (4).

## Patentansprüche

1. Verbindungselement von Konstruktionsprofilen (4), insbesondere für den Trockenbau von Gebäudewänden und Sanitäranlagen, das ein Paar parallel angeordneter Stirnplatten (1a, 1b) aufweist, von denen jede mit mindestens zwei gebogenen Rändern (11) zur Befestigung an den Konstruktionsprofilen (4) versehen ist, wobei das Verbindungselement weiterhin ein Klemmelement (3) umfasst, das die Stirnplatten (1a, 1b) quer verbindet, und mindestens ein Federungsglied (2) zwischen den Stirnplatten (1a, 1b) angeordnet ist, **dadurch gekennzeichnet, dass** das Federungsglied (2) ein Paar der Grundlagen (21a, 21b) aufweist, von denen jede jeweils auf mindestens einem Teil der Innenfläche der jeweiligen Stirnplatte (1a, 1b) angeordnet ist, während die Grundlagen (21a, 21b) durch mindestens ein federelastisches Element (24) miteinander verbunden sind, das durch einen Längsarm ausgebildet ist, der im Zusammenbaustand des Verbindungselements gebogen ist.

2. Verbindungselement nach dem Anspruch 1, **dadurch gekennzeichnet, dass** das Federungsglied (2) mindestens ein Distanzelement (61, 62) aufweist.

3. Verbindungselement nach einem der Ansprüche 1 und 2, **dadurch gekennzeichnet, dass** das Paar der Grundlagen (21a, 21b) des Federungsgliedes (2) durch ein Paar der im Grunde genommen parallel angeordneten Flächenplatten gebildet wird.

4. Verbindungselement nach dem Anspruch 3, **dadurch gekennzeichnet, dass** jede Grundlage (21a, 21b) eine Öffnung (22) zum Durchgang des Klemmelements (3) aufweist, wobei beide Grundlagen (21a, 21b) durch ein Paar der federelastischen Elemente (24) verbunden sind, die entlang der Seiten der Öffnungen (22) für das Klemmelement (3) angeordnet sind.

5. Verbindungselement nach dem Anspruch 4, **dadurch gekennzeichnet, dass** zwischen den federelastischen Elementen (24) neben der Öffnung (22) für das Klemmelement (3) ein Hauptdistanzelement (61) angeordnet ist.

6. Verbindungselement nach dem Anspruch 5, **dadurch gekennzeichnet, dass** mindestens eine der Grundlagen (21a, 21b) auf ihrem Umfang regelmäßig angeordnete Hilfsdistanzelemente (62) aufweist.

7. Verbindungselement nach einem der Ansprüche 1 bis 6, **dadurch gekennzeichnet, dass** mindestens eines der Paare der Stirnplatten (1a, 1b) die Mittel zum Aufsetzen und/oder Befestigung der Grundlage (21) des Federungsgliedes (2) aufweist.

8. Verbindungselement nach einem der Ansprüche 1 bis 7, **dadurch gekennzeichnet, dass** jede der Stirnplatten (1a, 1b) aus einem Metallblechstück geformt ist und das Federungsglied (2) aus einem Kunststoffstück geformt ist.

9. Verbindungselement nach einem der Ansprüche 1 bis 8, **dadurch gekennzeichnet, dass** die Stirnplatten (1a, 1b) in der Grundlage eine Dreieckform aufweisen, wobei jede der Stirnplatten (1a, 1b) drei gebogene Ränder (11) zur Befestigung an den Konstruktionsprofilen (4) aufweist.

## Revendications

1. Jonction pour profilés de construction (4), en particulier pour la construction à sec de murs de bâtiments et d'installations sanitaires, comprenant une paire de plaques frontales (1a, 1b) disposées parallèlement, dont chacune est pourvue d'au moins deux bords incurvés (11) pour la fixation aux profilés de construction (4), tandis que la jonction comprend en outre un élément de fixation (3) qui relie les plaques frontales (1a, 1b) de manière transversale, et entre les plaques frontales (1a, 1b) est disposé au moins un élément de suspension (2), **caractérisée en ce que** l'élément de suspension (2) comprend une paire de bases (21a, 21b), dont chacune est disposée sur au moins une partie de la surface intérieure de la plaque frontale respective (1a, 1b), tandis que les bases (21a, 21b) sont reliées l'une à l'autre par au moins un élément élastique (24) formé par un bras longitudinal, plié une fois la jonction assemblée.

2. Jonction selon la revendication 1, **caractérisée en ce que** l'élément de suspension (2) comprend au moins un élément d'écartement (61, 62).

3. Jonction selon l'une des revendications 1 et 2, **caractérisée en ce que** la paire de bases (21a, 21b) de l'élément de suspension (2) est formée d'une paire de plaques plates, substantiellement parallèles.

4. Jonction selon la revendication 3, **caractérisée en ce que** chaque base (21a, 21b) comprend une ouverture (22) pour le passage de l'élément de fixation (3), les deux bases (21a, 21b) étant reliées entre elles par une paire d'éléments élastiques (24) disposés sur les côtés des ouvertures (22) pour l'élément de fixation (3).

5. Jonction selon la revendication 4, **caractérisée en ce qu'**un élément d'écartement principal (61) est disposé entre les éléments élastiques (24) à côté de l'ouverture (22) pour l'élément de fixation (3).

6. Jonction selon la revendication 5, **caractérisée en ce qu'**au moins l'une des bases (21a, 21b) est pourvue d'éléments d'écartement auxiliaires (62) régulièrement disposés sur sa circonférence.

7. Jonction selon l'une des revendications de 1 à 6, **caractérisée en ce qu'**au moins une des paires de plaques frontales (1a, 1b) est pourvue de moyens de montage et/ou de fixation de la base (21) de l'élément de suspension (2).

8. Jonction selon l'une des revendications de 1 à 7, **caractérisée en ce que** chacune des plaques frontales (1a, 1b) est formée d'une seule pièce de tôle et que l'élément de suspension (2) est formé d'une seule pièce en plastique.

9. Jonction selon l'une des revendications de 1 à 8, **caractérisée en ce que** les plaques frontales (1a, 1b) sont de forme triangulaire à la base, chacune des plaques frontales (1a, 1b) étant pourvue de trois bords incurvés (11) pour la fixation aux profilés de construction (4).
